# EUROPÄISCHE PATENTANMELDUNG

(11) **EP 0 921 149 A1**
(43) Veröffentlichungstag der Anmeldung: **09.06.1999**
(21) Anmeldenummer: 98122995.8
(22) Anmeldetag: 03.12.1998
(51) Int. Cl.: C08K 3/00, C08J 3/20, H05B 6/02

(54) **Verbundwerkstoff auf Kunststoffbasis sowie Verfahren dazu**

(30) Priorität: 04.12.1997 DE 19753821
(71) Anmelder: DACS DvorakAdvanced Coating Solutions, 3602 Thun (CH)
(72) Erfinder: Dvorak, Michael Dr., 1022 Chavannes (CH); Giese, Wilhelm, 44339 Dortmund (DE)
(74) Vertreter: Hiebsch, Gerhard F., Dipl.-Ing.

(57) **Zusammenfassung**

Bei einem Verbundwerkstoff auf Kunststoffbasis mit eingelagerten magnetischen oder magnetisierbaren Partikeln von Werkstoffen mit spezifischen Eigenschaften bei höheren Temperaturen, weist der Magnetwerkstoff eine definiert eingestellte Curie-Temperatur zum kontrollierten Schalten oder Erzeugung von Wärme auf zur Steuerung der Temperatur und von Abschaltvorgängen in Abhängigkeit von dieser Temperatur. Zudem bietet der Magnetwerkstoff einen erhöhten Ummagnetisierverlust an.

## Beschreibung

Die Erfindung betrifft einen Verbundwerkstoff auf Kunststoffbasis mit eingelagerten magnetischen oder magnetisierbaren Partikeln von Werkstoffen. Zudem erfaßt die Erfindung Verfahren zur Herstellung sowie zum Einsatz des Verbundwerkstoffes.

Verbundwerkstoffe aus Kunststoff mit darin dispergierten oder eingelagerten Anteilen weiterer Werkstoffe -- wie Metallen, Oxiden, Karbiden, Ferriten od. dgl. -- sind bekannt. So werden etwa in der Elektronik für Antennenstäbe Ferrite verwendet, die mit einem Kunststoff gebunden sind, um die Elastizität des Kunststoffes zur Steigerung der Bruchsicherheit zu nutzen. Als Beispiel für die Weite des Anwendungsbereiches seien hier tragbare Empfangs- und Sendegeräte erwähnt.

Ein weiterer Bereich, in welchem Kunststoffe mit eingelagerten metallischen oder oxidischen Werkstoffen eingesetzt werden, ist die Automobil- und Flugzeugindustrie; dort werden die Verbundwerkstoffe in der Hauptsache zur Gewichtseinsparung oder zur Beseitigung von Verschleißproblemen angewendet.

In jüngerer Zeit werden Kunststoffe auch als Binder für Magnetwerkstoffe bei verschiedenen industriellen Anwendungen zum Herstellen von biegsamen oder elastischen Teilen bzw. beim Bau von Magnetschaltern verwendet. Auch zur Steuerung von Vorgängen, die keiner oder nur geringer Temperaturbelastung unterliegen, über die Magnetkraft werden Magnete mit einem Kunststoff als Binder verwendet.

In Kenntnis dieses Standes der Technik hat sich der Erfinder das Ziel gesetzt, den Einsatz von Verbundwerkstoffen auf Kunststoffbasis zu verbessern.

Zur Lösung dieser Aufgabe führt die Lehre des unabhängigen Patentanspruchs; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Bei umfangreichen Untersuchungen wurde gefunden, dass das Steuern von Temperaturen in bestimmten Temperaturbereichen automatisch und kontaktfrei möglich ist, d. h. ohne Verwendung von elektrischen Kontakten und Leitungen zum Ab- oder Einschalten, wenn der erfindungsgemäße Verbundwerkstoff verwendet wird.

Dabei hat sich gezeigt, dass die automatische Durchführung von Schalt- oder Steuervorgängen bei Temperaturen von 100 bis 600°C, vorzugsweise 200 bis 400°C, möglich wird, wenn man in ein hochtemperaturbeständiges Polymer -- oder in einen anderen nichtmagnetischen Matrixwerkstoff -- metallische oder oxidische Werkstoffe einlagert, die eine bestimmte Curie-Temperatur aufweisen; beim Erreichen der Curie-Temperatur ändern sich die magnetischen Eigenschaften des in den Kunststoff eingelagerten Werkstoffen, wodurch ein Ein- oder Abschaltvorgang entsteht oder im Induktionsfeld durch die schlagartige Änderung des Ummagnetisierungsverlustes beim Erreichen der Curie-Temperatur die weitere Erwärmung unterbrochen wird. Dies führt beispielsweise bei der Übertragung dieses Vorganges auf einen Kochtopf, dessen Boden mit diesem Verbundwerkstoff beschichtet ist, dazu, dass sich bei der Verwendung eines Induktionskochherdes die Erwärmung beim Erreichen der Curie-Temperatur abschaltet.

Das Einstellen der Curie-Temperatur erfolgt durch die Auswahl und die Zusammensetzung des verwendeten Einlagerungswerkstoffes. Der gleiche Vorgang kann auch in der Weise ausgenutzt werden, dass z. B. ein Teil, welches mit Magnetkraft gehalten wird, beim Erreichen einer bestimmten Temperatur abfällt, wodurch beispielsweise in der chemischen Industrie in einem Autoklaven Steuervorgänge in Abhängigkeit von der Temperatur ohne Aufwand an Steuerung und ohne Steuerleitungen durchgeführt werden können.

Als Einlagerungswerkstoffe eignen sich erfindungsgemäß Legierungen
- auf Eisenbasis mit - oder ohne -- wenigstens einem Zusatz aus den Elementen Al,B,C,Cr,Cu,Mo,NB,Nd, Si,Ti,V,W;
- auf Kobaltbasis, gegebenenfalls mit Zusätzen von Erdmetallen;
- auf Nickelbasis mit Zusätzen von Chrom und/oder Si;
- auf Kupferbasis mit Zusätzen von Ni und/oder Eisen;
- auf Manganbasis, gegebenfalls mit Zusätzen von Al.

Bei einer weiteren Ausgestaltung werden als Einlagerungswerkstoffe ferritische Werkstoffe aus den Oxiden von Fe,Ba,Sr eingesetzt.

Als hochtemperaturbeständige Polymere eignen sich besonder:
- Polyphenylensulfide = PPS (etwa nach DIN 7728 T1);
- Polyetheretherketone = PEEK;
- Liquid Cristal Polymere.

Polyetheretherketone sind hochtemperaturbeständige und schlagzähe Thermoplaste aus 4,4'-Difluorbenzophenon und Hydrochinon-Dikaliumsalz in Diphenylsulfan.

Die Auswahl der einzelnen Werkstoffe zum Herstellen des Verbundwerkstoffes erfolgt in Abhängigkeit von den benötigten Eigenschaften wie z. B. Korrosionsbeständigkeit, Festigkeit, Curie-Temperatur od. dgl..

Ein weiter wichtiger Faktor, mit dem die Eigenschaften beeinflußt zu werden vermögen, sind Kornform, Kornverteilung und Kornaufbau der eingelagerten magnetischen oder magnetisierbaren Partikel.

So erfassen weitere Merkmale der Erfindung den Einsatz ei nes Polyphenylensulfids, eines Polyetheretherketons oder eines Liquid-Cristal-Polymers als Kunststoff. Zudem können in den Kunststoff magnetische Partikel auf Metall- oder Oxidbasis oder aber magnetisierbare Partikel auf Metall- oder Oxidbasis eingelagert sein.

Auch ein in den Kunststoff eingelagertes Pulver auf der Basis von Kobalt oder einer Kobaltlegierung, gegebenenfalls durch Zusätze von Erdmetallen, kann als günstig angesehen werden, oder aber die Einlagerung eines metallischen Pulvers auf der Basis von Eisen oder einer Eisenlegierung --gegebenenfalls mit wenigstens einem Zusatz von Al, B, C, Cr, Co, Cu, Mo, Nb, Nd, Ni, Si, Ti, V, W -- in den Kunststoff; eine Legierung auf Eisenbasis kann mit Zusätzen von Nickel zwischen 15 und 45 Gew.-%, vorzugsweise 20 und 35 Gew.-% versehen sein.

Im Rahmen der Erfindung wird in den Kunststoff ein metallisches Pulver auf der Basis von Nickel oder einer Nickel-Chromlegierung -- gegebenenfalls mit Zusätzen von Si und/oder C -- eingelagert oder ein metallisches Pulver auf der Basis von Mangan, gegebenenfalls mit Zusätzen von Al. Auch ist es denkbar, in den Kunststoff ein metallisches Pulver auf der Basis von Kupfer mit Zusätzen von Ni und/oder Fe einzulagern oder ein Pulver auf der Basis von Eisenoxiden oder ein Pulver auf der Basis von metallischen Ferriten, insbesondere ein Pulver auf der Basis von Ferriten, welches gegebenenfalls Fe-, Ba-, Sr-Oxide erfasst oder gegebenenfalls Zusätze von Oxiden der Metallen Mn, Zn, Mg, Ni, Co. Erfindungsgemäß kann das Ausgangspulver auch durch Schmelzen des Kunststoffes und Einmischen der magnetischen oder den magnetisierbaren Partikel mit anschließendem Verdüsen -- insbesondere mit anschließendem Ultraschall-Verdüsen -- oder mit anschließendem kryogenen Brechen erzeugt werden.

Auch ist es möglich, den Verbundwerkstoff in Form einer Pulvermischung zum Extrudieren von Fertigteilen aus der Pulvermischung, durch Pressen aus der Pulvermischung bzw. durch Gießen oder durch Walzen aus der Pulvermischung einzusetzen.

Weitere Vorteile, Merkmale und Einzelheiten der Erfindung ergeben sich aus der nachfolgenden Beschreibung bevorzugter Ausführungsbeispiele.

### Beispiel 1

Zum Dämpfen von Lebensmitteln sollte eine induktionsfähige Beschichtung das Verwenden eines Edelstahlkochtopfes auf einem Induktionsküchenherd wegen der schlechten Heizbarkeit von Edelstahl im Induktionsfeld ermöglichen.

Zur Lösung des Problems und zur Kontrolle der Wärme durch die Änderung der Induktionsfähigkeit beim Erreichen des Curie-Punktes erfolgte die Beschichtung des Topfbodens nach dem HVOF Verfahren (Hochgeschwindigkeitsflammspritzen) mit einem Verbundwerkstoff aus PPS mit 70 Vol.-% und 30 Vol.-% einer Fe-Ni Legierung mit 32 Gew.-% Ni. Das Verbundpulver wurde durch mechanisches Agglomerieren hergestellt.

Nach dem Vorbereiten durch Sandstrahlen wurde der Topfboden zunächst mit einer Haftschicht mittels Pulverflammspritzen beschichtet, danach der Topfboden des Kochtopfes auf 250° C vorgewärmt und dann mit einer HVOF Anlage 500 µm dick beschichtet. Als Haftschicht wurde eine gattierte Schicht NiAl-PPS verwendet.

Auf die so aufgebrachte Schicht wurde anschließend mit dem gleichen Spritzverfahren eine 200 µm dicke Inconel* 625-Schicht zur besseren Verschleißbeständigkeit aufgespritzt.
*) Marke der Inco für hitze- und korrosionsbeständige Nickel-Chrom-Legierungen mit Bestandteilen von z. B. B,Fe,Mn,Ti,Nb+Ta,Mo,Cu,Co,C u. Si;

Bei einem nach dem Beschichten durchgeführten Kochversuch auf einer Induktionskochplatte wurde festgestellt, dass die Flüssigkeit in dem so beschichteten Kochtopf die Temperatur von 95°C durch die Steuerung des Feldes über den Curie-Punkt nicht überschritt.

### Beispiel 2

In einer Bratpfanne aus Aluminium sollte eine durch Induktion heizbare Innenschicht durch Plasmaspritzen aufgebracht werden, die außer zur Wärmeentwicklung auch noch als Antihaftschicht dienen sollte.

Auf die Oberfläche dieser Innenschicht sollte anschließend durch autogenes Flammspritzen eine höchstens 0,1 mm dicke Verschleiß-Schutzschicht aufgebracht werden, die gleichzeitig auch eine dekorative Verbesserung bringen sollte.

Als Spritzwerkstoff für die induktiv heizbare Schicht sollte ein sprühgetrocknetes Agglomerat aus Polyphenylensulfid (PPS) und Bariumferrit verwendet werden.

Der Curie-Punkt dieses Agglomerates bzw. der Ferritmischung wurde so eingestellt, dass sich die Abschaltung und Regelung der Wärmezufuhr bei etwa 220°C einstellte.

Wie die Versuche mit einer solchen beschichteten Aluminiumbratpfanne gezeigt haben, wurden alle an diese Pfanne gestellten Forderungen erfüllt.

### Beispiel 3

Ein Autoklav für die Herstellung von mit Kohlefasern verstärkten Verbundwerkstoffen sollte zur exakten Temperaturführung beim Verbindungsprozeß des gewickelten Verbundkörpers gesteuert werden. Da der Autoklav induktiv geheizt wurde, sollte zur Steuerung eine Schicht aus Polyamid - Imiden, in die eine Eisenoxidmischung mit einem Curie_Punkt bei 300°C eingelagert war, durch ein thermisches Spritzverfahren aufgebracht werden.

Beim Betrieb wurde festgestellt, dass durch den Abschaltvorgang beim Überschreiten des Curie-Punktes und beim Wiedereinschalten der Heizung beim Unterschreiten des Curie-Punktes eine sehr genaue Temperaturkontrolle erreicht wurde.

### Beispiel 4

Entspricht Beispiel 2 mit der Anderung, dass auf die Funktionsschicht eine dünne Kunststoff-Al₂O₃Schicht als Korrosionsschutz aufgebracht wurde.

Weitere Einzelheiten und Vorteile sind den Merkmalen der nachfolgenden Patentansprüche zu entnehmen.

## Patentansprüche

1. Verbundwerkstoff auf Kunststoffbasis mit eingelagerten magnetischen oder magnetisierbaren Partikeln von Werkstoffen mit spezifischen Eigenschaften bei höheren Temperaturen, bei dem der Magnetwerkstoff eine definiert eingestellte Curie-Temperatur zum kontrollierten Schalten oder Erzeugung von Wärme aufweist zur Steuerung der Temperatur und von Abschaltvorgängen in Abhängigkeit von dieser Temperatur.

2. Verbundwerkstoff nach Anspruch 1, dadurch gekennzeichnet, dass der Magnetwerkstoff einen erhöhten Ummagnetisierverlust aufweist.

3. Verbundwerkstoff nach Anspruch 1 oder 2, dadurch gekennzeichnet, dass der Temperaturbereich für die Anwendung eines hochtemperaturbeständigen Polymers zwischen 100 und 600°C, vorzugsweise zwischen 200 und 400°C, liegt.

4. Verbundwerkstoff nach einem der Ansprüche 1 bis 3, dadurch gekennzeichnet, dass in den Kunststoff ein Pulver mit einer runden Kornform oder ein Pulver mit einer plättchenförmigen Kornform oder ein Pulver mit einer polygonen Kornform eingelagert ist.

5. Verbundwerkstoff nach einem der Ansprüche 1 bis 3, gekennzeichnet durch das Einstellen der Curie-Temperatur über die Magnetwerkstoffe.

6. Verfahren zum Herstellen eines Verbundwerkstoffes nach wenigstens einem der Ansprüche 1 bis 5, dadurch gekennzeichnet, dass die magnetischen oder magnetisierbaren Partikel durch ein mechanisches Mischverfahren in den Kunststoff eingetragen werden.

7. Verfahren zum Herstellen eines Verbundwerkstoffes nach wenigstens einem der Ansprüche 1 bis 5, dadurch gekennzeichnet, dass das Ausgangspulver aus der Mischung des Kunststoffes mit den magnetischen oder den magnetisierbaren Partikel durch Sprühtrocknen erzeugt wird, oder dass das Ausgangspulver aus der Mischung des Kunststoffes mit den magnetischen oder den magnetisierbaren Partikel durch Agglomeration im Attritor oder nach dem Pelletierverfahren erzeugt wird.

8. Verfahren, bei dem der Verbundwerkstoff in Form einer Pulvermischung nach wenigstens einem der Ansprüche 1 bis 5 eingesetzt wird, dadurch gekennzeichnet, dass das Ausgangspulver in einem Trägergasstrom aufgetragen wird, wobei das Ausgangspulver vor dem Einbringen in eine Spritzflamme gemischt und durch Flammspritzen aufgetragen wird.

9. Verfahren, bei dem der Verbundwerkstoff in Form einer Pulvermischung nach wenigstens einem der Ansprüche 1 bis 5 eingesetzt wird, dadurch gekennzeichnet, dass eine Schicht aus der Pulvermischung durch thermisches Spritzen hergestellt wird.

10. Verfahren, bei dem der Verbundwerkstoff in Form einer Pulvermischung nach wenigstens einem der Ansprüche 1 bis 5 eingesetzt wird, dadurch gekennzeichnet, dass das Verbundpulver in einem Wirbelbett-Sinterverfahren verarbeitet wird.

11. Verfahren, bei dem der Verbundwerkstoff in Form einer Pulvermischung nach wenigstens einem der Ansprüche 1 bis 5 eingesetzt wird, dadurch gekennzeichnet, dass mit ihm Heizelemente mit automatischer Abschaltung beim Erreichen der Solltemperatur, insbesondere Heizelemente für explosionsgeschützte Autoklaven mit automatischer Abschaltung beim Erreichen der Solltemperatur, hergestellt werden, oder Meßelemente zur Durchführung von Meßvorgängen.
